# EUROPEAN PATENT APPLICATION

(11) **EP 3 809 017 A1**
(43) Date of publication of application: **21.04.2021**
(21) Application number: 18923545.0
(22) Date of filing: 18.06.2018
(51) Int. Cl.: F16H 55/14

(54) **RESIN GEAR**

(71) Applicant: Showa Denko Materials Co., Ltd., Tokyo 100-6606 (JP)
(72) Inventor: MORIO Yoichi, Tokyo 100-6606 (JP); AOYAGI Tatsuya, Tokyo 100-6606 (JP)
(74) Representative: Hoffmann Eitle
(86) International application number: PCT/JP2018/023153
(87) International publication number: WO 2019/244216

(57) **Abstract**

A resin gear 1 includes an annular metal bush 3 and an annular resin member 7 provided around the metal bush 3 and having a tooth profile 7a formed in an outer peripheral portion. The metal bush 3 and the resin member 7 are disposed so as to be relatively rotatable in a direction of rotation of the resin gear 1. A plurality of spaces K1 entering an outer peripheral surface 30 of the metal bush 3 and an inner peripheral surface 7i of the resin member 7 are formed, so as to be aligned along the direction of rotation, between the metal bush 3 and the resin member 7. An elastic member 5 is disposed in the space K1.

## Description

### Technical Field

One aspect of the present invention relates to a resin gear.

### Background Art

Resin gears are lightweight, excellent in quietness, and widely used as, for example, vehicular or industrial gears. A resin gear including a metal bush, a resin member provided around the metal bush and having a tooth profile formed in an outer peripheral portion, and an elastic member provided between the metal bush and the resin member is known as a resin gear (see, for example, Patent Literature 1). In a case where an impact is applied to such a resin gear as a result of meshing with another gear, the impact is absorbed and damped by elastic deformation of the elastic member, that is, the damper effect (damping function) of the elastic member is obtained.

### Citation List

### Patent Literature

Patent Literature 1: Japanese Unexamined Patent Publication No. 2017-151000

### Summary of Invention

### Technical Problem

In the resin gear described above, the elastic member is bonded by means of an adhesive to the outer peripheral surface of the metal bush and the inner peripheral surface of the resin member. In this case, the damper effect of the elastic member may not be sufficiently obtained depending on, for example, the degree of adhesion of the adhesive.

An object of one aspect of the present invention is to provide a resin gear allowing the damper effect of an elastic member to be sufficiently obtained.

### Solution to Problem

A resin gear according to one aspect of the present invention is a resin gear including an annular metal bush and an annular resin member provided around the metal bush and having a tooth profile formed in an outer peripheral portion, in which the metal bush and the resin member are disposed so as to be relatively rotatable in a direction of rotation of the resin gear, a plurality of spaces entering an outer peripheral surface of the metal bush and an inner peripheral surface of the resin member are formed, so as to be aligned along the direction of rotation, between the metal bush and the resin member, and an elastic member is disposed in the space.

In a case where an impact is applied to the resin gear as a result of meshing with another gear, the resin member tends to rotate relative to the metal bush in the direction of rotation of the resin gear (hereinafter, also simply referred to as "relative rotation"). At this time, a pair of forces (shearing forces) in opposite directions are generated on the resin member side and the metal bush side of the elastic member disposed in the space, the elastic member is elastically deformed, and the elastic member acts as a detent against the relative rotation. As a result, in a case where an impact is applied as a result of meshing with another gear, the impact is sufficiently absorbed and damped by such elastic deformation. Accordingly, the damper effect of the elastic member can be sufficiently obtained.

In the resin gear according to one aspect of the present invention, the metal bush and the resin member may abut against each other so as to be slidable in the direction of rotation. As a result, it is possible to realize a configuration in which the metal bush and the resin member are disposed so as to be rotatable relative to each other.

In the resin gear according to one aspect of the present invention, the metal bush and the resin member may not be bonded to each other. As a result, it is possible to realize a configuration in which the metal bush and the resin member are disposed so as to be rotatable relative to each other.

In the resin gear according to one aspect of the present invention, the elastic member may be bonded to an inner surface of the space. In this case, the elastic member is unlikely to disengage from the space, the elastic member can be elastically deformed to a large extent, and thus it is also possible to cope with a case where a large impact is applied. Eventually, it is possible to realize the resin gear that is capable of coping with a high load.

In the resin gear according to one aspect of the present invention, the space may have an inner surface intersecting with an axial direction of the resin gear and the elastic member may engage with the inner surface. As a result, disengagement of the elastic member from the space in the axial direction of the resin gear (hereinafter, simply referred to as "axial direction") can be prevented.

In the resin gear according to one aspect of the present invention, the space may be a hole penetrating the resin gear along an axial direction of the resin gear. In this case, the elastic member can be easily provided between the metal bush and the resin member by injection molding.

In the resin gear according to one aspect of the present invention, the space and the elastic member may have a columnar shape having an axial direction of the resin gear as a height direction. In this case, the space and the resin member can be easily provided.

In the resin gear according to one aspect of the present invention, the space and the elastic member may have an elongated shape in which a radial direction of the resin gear is a longitudinal direction thereof when viewed from an axial direction of the resin gear. In this case, the elastic member is unlikely to disengage from the space when the resin member and the metal bush rotate relative to each other, the elastic member can be elastically deformed to a large extent, and thus it is also possible to cope with a case where a large impact is applied. Eventually, it is possible to realize the resin gear that is capable of coping with a high load.

In the resin gear according to one aspect of the present invention, the space and the elastic member may have a shape in which both end portions in the longitudinal direction are enlarged when viewed from an axial direction of the resin gear. In this case, the elastic member is even more unlikely to disengage from the space when the resin member and the metal bush rotate relative to each other, the elastic member can be elastically deformed to a larger extent, and thus it is also possible to cope with a case where a larger impact is applied. Eventually, it is possible to realize the resin gear that is capable of coping with a higher load.

### Advantageous Effects of Invention

According to one aspect of the present invention, it is possible to provide a resin gear that is capable of sufficiently obtaining the damper effect of an elastic member.

### Brief Description of Drawings

FIG. 1 is a front view of a resin gear according to one embodiment.
FIG. 2 is a cross-sectional view taken along line II-II of FIG 1.
FIG. 3(a) is a cross-sectional view taken along line III-III of FIG. 2 for describing elastic deformation of an elastic member of the resin gear. FIG 3(b) is another cross-sectional view taken along line III-III of FIG 2 for describing the elastic deformation of the elastic member of the resin gear.
FIG. 4(a) is a diagram illustrating a resin gear manufacturing method. FIG 4(b) is a diagram illustrating a continuation of FIG 4(a). FIG 4(c) is a diagram illustrating a continuation of FIG. 4(b).
FIG. 5(a) is an enlarged front view illustrating a part of a resin gear according to a first modification example. FIG. 5(b) is a cross-sectional view taken along line V-V of FIG. 5(a).
FIG. 6 is a cross-sectional view of a resin gear according to a second modification example.
FIG. 7(a) is an enlarged front view illustrating a part of a resin gear according to a third modification example. FIG. 7(b) is an enlarged front view illustrating a part of a resin gear according to a fourth modification example.
FIG. 8(a) is an enlarged front view illustrating a part of a resin gear according to a fifth modification example. FIG. 8(b) is an enlarged front view illustrating a part of a resin gear according to a sixth modification example.

### Description of Embodiments

Hereinafter, an embodiment will be described in detail with reference to the accompanying drawings. In the description of the drawings, the same or corresponding elements will be denoted by the same reference symbols without redundant description.

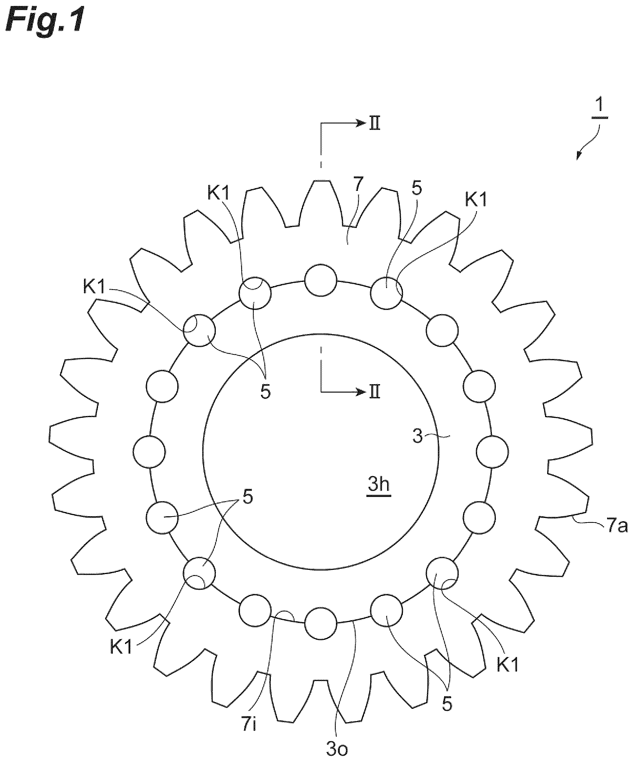

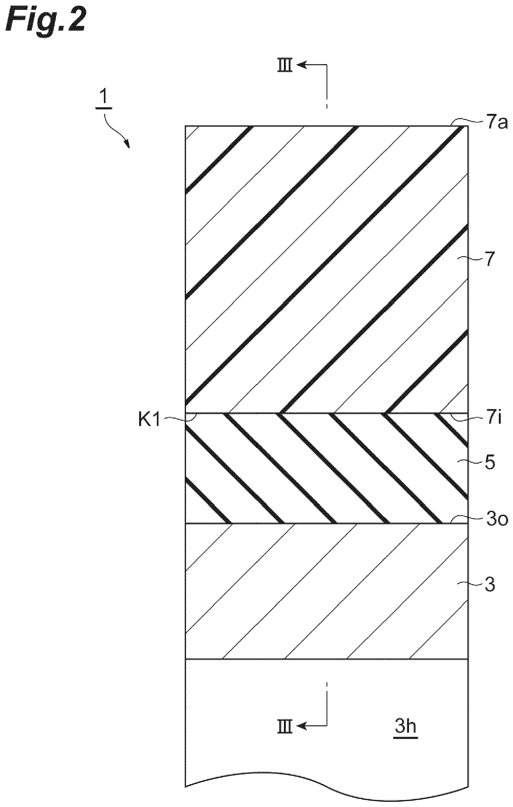

As illustrated in FIGS. 1 and 2, a resin gear 1 is a so-called high-strength resin gear and is used as a vehicular or industrial gear. For example, the resin gear 1 can be used as a balance shaft gear, a camshaft gear, or the like in an engine. The resin gear 1 includes a metal bush 3 and a resin member 7. The resin gear 1 is a spur gear.

The metal bush 3 is a member attached to, for example, a rotary shaft (not illustrated). The metal bush 3 has a circular ring shape. The metal bush 3 is formed of a metal such as stainless steel. The metal bush 3 is provided with a through hole 3h into which the rotary shaft is inserted.

The resin member 7 is a member meshing with another gear. The resin member 7 has an annular shape. The resin member 7 is formed of resin. The resin member 7 is provided around the metal bush 3. A tooth profile 7a is formed in the outer peripheral portion of the resin member 7. A plurality of the tooth profiles 7a are formed at predetermined intervals in the circumferential direction of the resin member 7. It should be noted that provision around an elastic member 5 includes not only being provided in direct contact around the elastic member 5 but also being provided via another member around the elastic member 5.

The metal bush 3 and the resin member 7 are disposed so as to be relatively rotatable in the direction of rotation of the resin gear 1 (hereinafter, also simply referred to as "direction of rotation"). Specifically, the metal bush 3 and the resin member 7 abut against each other so as to be slidable in the direction of rotation. More specifically, the outer diameter of the metal bush 3 and the inner diameter of the resin member 7 are equal to each other, an outer peripheral surface 3o of the metal bush 3 and an inner peripheral surface 7i of the resin member 7 are not bonded to each other, and the outer peripheral surface 30 and the inner peripheral surface 7i are in contact with each other in a relatively rotatable state.

In the resin gear 1 of the present embodiment, a plurality of spaces K1 entering the outer peripheral surface 30 of the metal bush and the inner peripheral surface 7i of the resin member 7 are formed, so as to be aligned along the direction of rotation, between the metal bush 3 and the resin member 7. The space K1 is a hole penetrating the resin gear 1 along the axial direction of the resin gear 1 (hereinafter, also simply referred to as "axial direction"). When viewed from the axial direction, the spaces K1 are arranged at equal intervals along the direction of rotation. The space K1 has a columnar shape having the axial direction as the height direction of the space K1. The space K1 is defined by the U groove that is formed on the outer peripheral surface 30 and the U groove that is formed on the inner peripheral surface 7i of the resin member 7. In the radial direction of the resin gear 1 (hereinafter, also simply referred to as "radial direction"), the inside half of the space K1 enters the metal bush 3 side and the outside half of the space K1 enters the resin member 7 side.

The elastic member 5 is disposed in the space K1. The elastic member 5 has a shape corresponding to the shape of the space K1. Specifically, the elastic member 5 has a columnar shape coaxial with and equal in diameter to the space K1 with the axial direction being the height direction of the elastic member 5. The outer peripheral surface of the elastic member 5 abuts against the inner surface of the space K1. At least a part of the elastic member 5 is bonded to the inner surface of the space K1. The elastic member 5 is provided so as to come into contact with the inner surface of the space K1 via an adhesive.

The elastic member 5 is formed of rubber. The rubber is butadiene rubber, chloroprene rubber, butyl rubber, styrene butadiene rubber, nitrile rubber, ethylene propylene rubber, acrylic rubber, fluororubber, epichlorohydrin rubber, silicone rubber, or the like. From the viewpoint of durability and heat resistance, the rubber is preferably fluororubber or silicone rubber. The elastic member 5 may be configured by a plurality of members (rubber layers) being stacked.

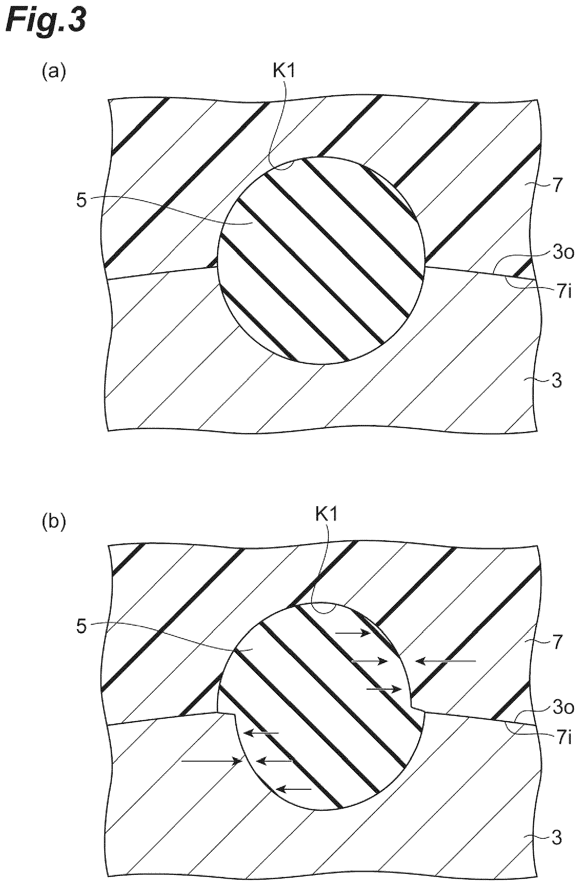

The elastic member 5 absorbs and damps the impact that is generated by the resin gear 1 meshing with another gear by being elastically deformed. Specifically, in a case where an impact is applied to the resin gear 1 as a result of meshing with another gear, the resin member 7 tends to rotate relative to the metal bush 3 in the direction of rotation. At this time, a pair of forces (shearing forces) in opposite directions are generated on the resin member 7 side and the metal bush 3 side in the elastic member 5 disposed in the space K1, the elastic member 5 is elastically deformed from the state that is illustrated in FIG. 3(a) to the state that is illustrated in FIG. 3(b), and the elastic member 5 acts as a detent against the relative rotation. As a result, in a case where an impact is applied as a result of meshing with another gear, the impact is sufficiently absorbed and damped by such elastic deformation. Accordingly, the damper effect of the elastic member 5 can be sufficiently obtained.

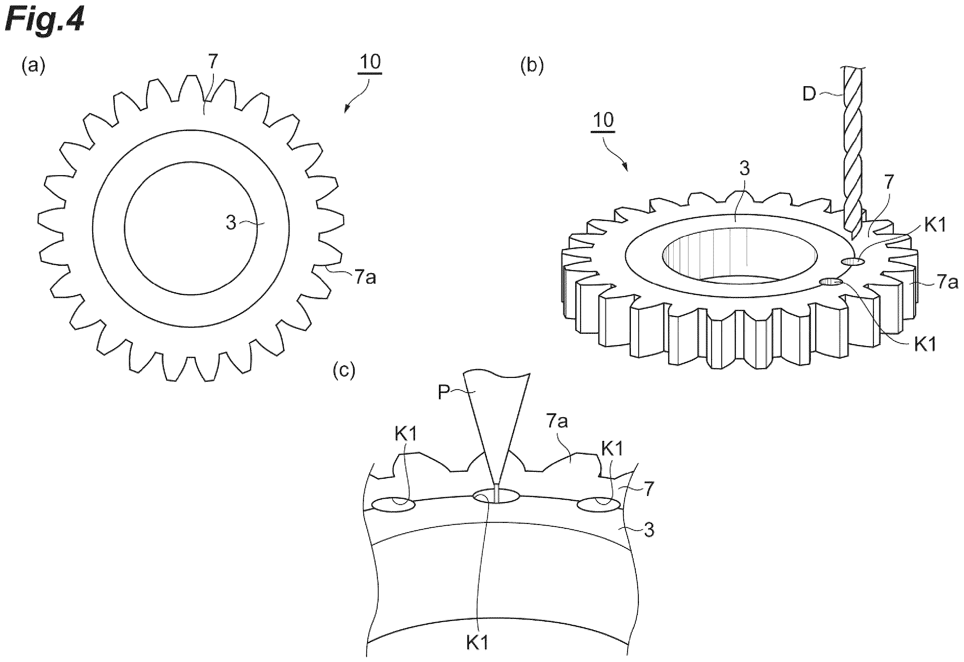

In a case where the resin gear 1 described above is manufactured, an intermediate body 10 including the metal bush 3 and the resin member 7 illustrated in FIG. 4(a) is formed first by a known method. As illustrated in FIG. 4(b), processing by means of a cutting tool (drilling by means of a drill D in the drawing) is performed on the intermediate body 10 and the plurality of spaces K1 are formed in the intermediate body 10. After an adhesive is applied in advance to the inner surface of the space K1, rubber is injected into the space K1 via a pin gate P as illustrated in FIG. 4(c), the space K1 is filled with the rubber, and the elastic member 5 is molded in the space K1. Then, necessary processing is performed and the resin gear 1 is manufactured as a result. It should be noted that methods for manufacturing the resin gear 1 are not particularly limited and various methods can be used.

As described above, in a case where an impact is applied to the resin gear 1 as a result of meshing with another gear, the elastic member 5 is elastically deformed and acts as a detent and the impact is sufficiently absorbed and dampened. As a result, the damper effect of the elastic member 5 can be sufficiently obtained. It is possible to provide the resin gear 1 as a high-gear strength gear having a built-in rubber damper.

In the resin gear 1, the metal bush 3 and the resin member 7 abut against each other so as to be slidable in the direction of rotation. As a result, it is possible to realize a configuration in which the metal bush 3 and the resin member 7 are disposed so as to be rotatable relative to each other.

In the resin gear 1, the metal bush 3 and the resin member 7 are not bonded to each other. As a result, it is possible to realize a configuration in which the metal bush 3 and the resin member 7 are disposed so as to be rotatable relative to each other.

In the resin gear 1, the elastic member 5 is bonded to the inner surface of the space K1. In this case, the elastic member 5 is unlikely to disengage from the space and the elastic member 5 can be elastically deformed to a large extent. As a result, it is also possible to cope with a case where a large impact is applied to the resin gear 1, and thus it is possible to realize the resin gear 1 that is capable of coping with a high load. It should be noted that the elastic member 5 does not have to be bonded to the inner surface of the space K1 and, in this case, the cost of the resin gear 1 can be reduced.

In the resin gear 1, the space K1 is a hole penetrating the resin gear 1 along the axial direction. In this case, the elastic member 5 can be easily provided between the metal bush 3 and the resin member 7 by injection molding.

In the resin gear 1, the space K1 and the elastic member 5 have a columnar shape. As a result, the space K1 and the elastic member 5 can be easily provided.

Although an embodiment of the present invention has been described above, the present invention is not limited to the embodiment described above.

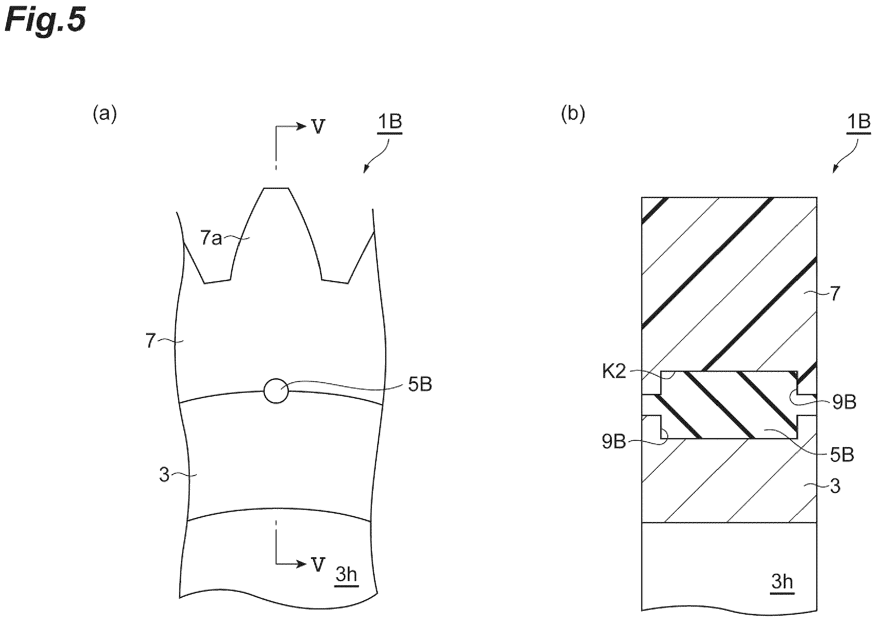

Although the elastic member 5 is provided in the space K1 between the metal bush 3 and the resin member 7 in the embodiment described above, the present invention is not limited thereto. A space K2 may be formed instead of the space K1 and an elastic member 5B may be provided instead of the elastic member 5 as in a resin gear 1B illustrated in FIGS. 5(a) and 5(b).

The space K2 has a stepped columnar shape in which both end portions in the axial direction are smaller in diameter than the other part. The space K2 has an inner surface 9B orthogonal to (intersecting with) the axial direction. The elastic member 5B has the same stepped columnar shape as the space K2 and is disposed in the space K2. The elastic member 5B abuts against the inner surface of the space K2. The elastic member 5B engages with the inner surface 9B orthogonal to the axial direction. As described above, in the resin gear 1B, the elastic member 5B engages with the inner surface 9B orthogonal to the axial direction, and thus axial disengagement of the elastic member 5B from the space K2 can be prevented.

In the embodiment described above, the numbers of the spaces K1 and the elastic members 5 aligned along the direction of rotation and the intervals thereof are not particularly limited. A plurality (two or more) of the spaces K1 and a plurality (two or more) of the elastic members 5 may be formed so as to be aligned along the direction of rotation. The numbers of the spaces K1 and the elastic members 5 aligned along the direction of rotation and the intervals thereof may be appropriately changed in accordance with specifications or the like.

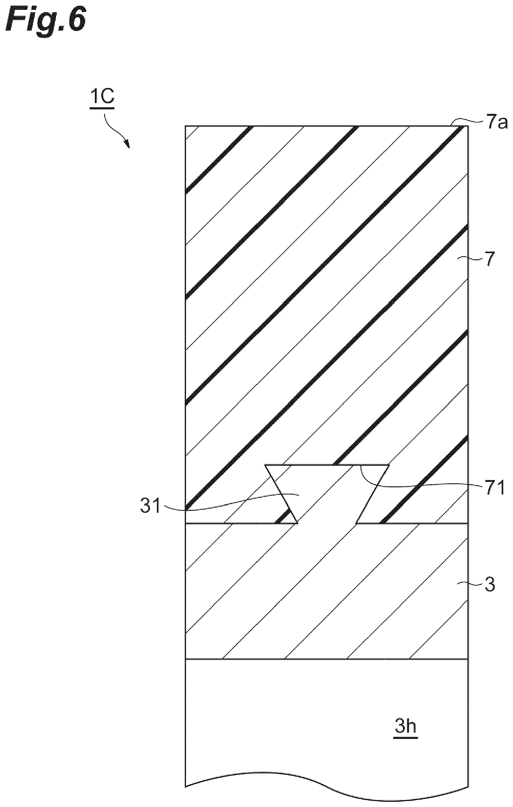

Although the outer peripheral surface 30 of the metal bush 3 and the inner peripheral surface 7i of the resin member 7 extend straight in the axial direction in the embodiment described above, the present invention is not limited thereto. A projecting portion 31 may be formed on the outer peripheral surface 3o, a recessed portion 71 corresponding to the projecting portion 31 may be formed on the inner peripheral surface 7i, and the projecting portion 31 may be fitted in the recessed portion 71 so as to be slidable in the direction of rotation as in a resin gear 1C illustrated in FIG. 6. As a result, the metal bush 3 and the resin member 7 can be engaged with each other in the axial direction and disengagement of one from the other can be prevented. In addition, during sliding (relative rotation) of the metal bush 3 and the resin member 7 in the direction of rotation, the projecting portion 31 is capable of functioning as a rail guiding the sliding. It should be noted that FIG 6, unlike FIG 2, is a cross-sectional view at a cross-sectional position where the elastic member 5 is not illustrated.

The shapes of the space and the elastic member in one aspect of the present invention are not limited to the shapes of the space K1 and the elastic member 5 of the embodiment described above, and various shapes can be adopted. The shapes of the space and the elastic member in one aspect of the present invention may be, for example, the following shapes.

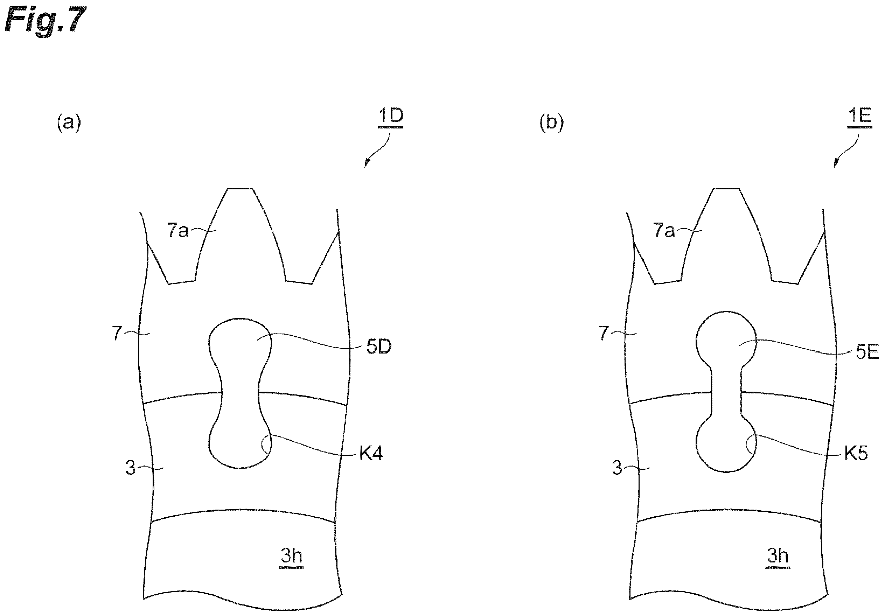

For example, in a resin gear 1D illustrated in FIG. 7(a), an elastic member 5D is provided in a space K4 between the metal bush 3 and the resin member 7. When viewed from the axial direction, the space K4 and the elastic member 5D have an elongated shape in which the radial direction is the longitudinal direction thereof. When viewed from the axial direction, the space K4 and the elastic member 5D have a shape in which both end portions in the longitudinal direction are enlarged. When viewed from the axial direction, the space K4 and the elastic member 5D have an edge that is curved and smoothly bent. When viewed from the axial direction, the space K4 and the elastic member 5D have a gourd shape.

For example, in a resin gear 1E illustrated in FIG. 7(b), an elastic member 5E is provided in a space K5 between the metal bush 3 and the resin member 7. When viewed from the axial direction, the space K5 and the elastic member 5E have an elongated shape in which the radial direction is the longitudinal direction thereof. When viewed from the axial direction, the space K5 and the elastic member 5E have a shape in which both end portions in the longitudinal direction are enlarged. When viewed from the axial direction, the space K5 and the elastic member 5E have a dumbbell shape in which both end portions in the longitudinal direction are round.

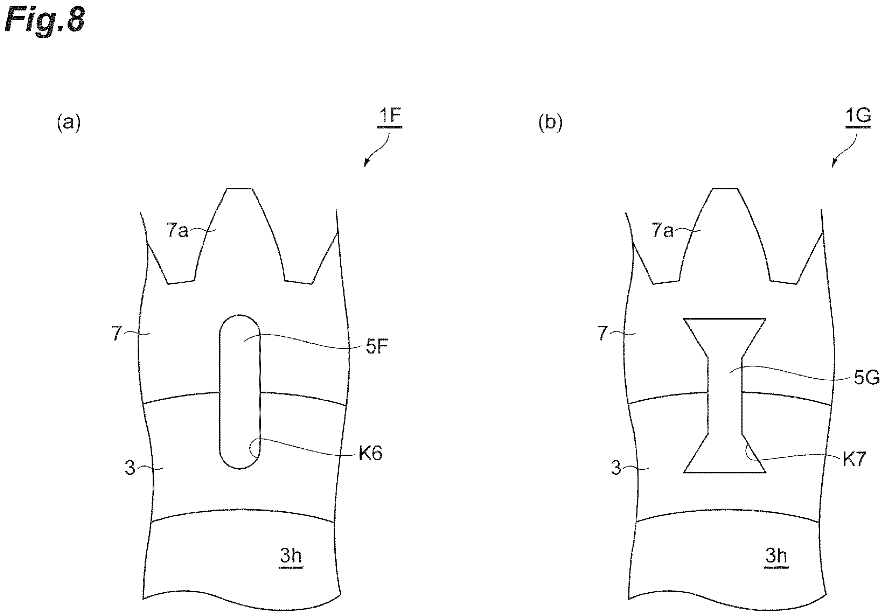

For example, in a resin gear 1F illustrated in FIG. 8(a), an elastic member 5F is provided in a space K6 between the metal bush 3 and the resin member 7. When viewed from the axial direction, the space K6 and the elastic member 5F have an elongated shape in which the radial direction is the longitudinal direction thereof. When viewed from the axial direction, the space K6 and the elastic member 5F have a rod shape extending in the radial direction.

For example, in a resin gear 1G illustrated in FIG. 8(b), an elastic member 5G is provided in a space K7 between the metal bush 3 and the resin member 7. When viewed from the axial direction, the space K7 and the elastic member 5G have an elongated shape in which the radial direction is the longitudinal direction thereof. When viewed from the axial direction, the space K7 and the elastic member 5G have a shape in which both end portions in the longitudinal direction are enlarged. When viewed from the axial direction, the space K7 and the elastic member 5G have a dumbbell shape in which both end portions in the longitudinal direction expand radially outward.

In the resin gears 1D to 1G, the spaces K4 to K7 and the elastic members 5D to 5G have an elongated shape in which the radial direction is the longitudinal direction thereof, and thus the elastic members 5D to 5G are unlikely to disengage from the spaces K4 to K7 when the resin member 7 and the metal bush 3 rotate relative to each other and the elastic members 5D to 5G can be elastically deformed to a large extent. It is also possible to cope with a case where a large impact is applied, and thus it is possible to realize the resin gears 1D to 1G that are capable of coping with a high load.

Particularly, the spaces K4, K5, and K7 and the elastic members 5D, 5E, and 5G have a shape in which both end portions in the longitudinal direction are enlarged. As a result, the elastic members 5D, 5E, and 5G are even more unlikely to disengage from the spaces K4, K5, and K7 when the resin member 7 and the metal bush 3 rotate relative to each other and the elastic members 5D, 5E, and 5G can be elastically deformed to a larger extent. It is also possible to cope with a case where a larger impact is applied, and thus it is possible to realize the resin gears 1D, 1E, and 1G that are capable of coping with a higher load.

Although a form in which the resin gear 1 is a spur gear has been described as an example in the embodiment described above, the resin gear 1 may be a helical gear or the like. In the embodiment described above, an adhesive may be interposed between the metal bush 3 and the resin member 7 insofar as the metal bush 3 and the resin member 7 are capable of rotating relative to each other by a certain amount.

In the present invention, the configurations of the above-described embodiment and modification examples may be appropriately combined. The present invention can be variously modified within the gist thereof.

### Reference Signs List

1, 1B, 1C, 1D, 1E, 1F, 1G: resin gear, 3: metal bush, 3o: outer peripheral surface, 5, 5B, 5D, 5E, 5F, 5G: elastic member, 7: resin member, 7a: tooth profile, 7i: inner peripheral surface, 9B: inner surface intersecting with axial direction, K1, K2, K4, K5, K6, K7: space.

## Claims

1. A resin gear comprising:
an annular metal bush; and
an annular resin member provided around the metal bush and having a tooth profile formed in an outer peripheral portion, wherein
the metal bush and the resin member are disposed so as to be relatively rotatable in a direction of rotation of the resin gear,
a plurality of spaces entering an outer peripheral surface of the metal bush and an inner peripheral surface of the resin member are formed, so as to be aligned along the direction of rotation, between the metal bush and the resin member, and
an elastic member is disposed in the space.

2. The resin gear according to claim 1, wherein the metal bush and the resin member abut against each other so as to be slidable in the direction of rotation.

3. The resin gear according to claim 1 or 2, wherein the metal bush and the resin member are not bonded to each other.

4. The resin gear according to any one of claims 1 to 3, wherein the elastic member is bonded to an inner surface of the space.

5. The resin gear according to any one of claims 1 to 4, wherein
the space has an inner surface intersecting with an axial direction of the resin gear, and
the elastic member engages with the inner surface.

6. The resin gear according to any one of claims 1 to 5, wherein the space is a hole penetrating the resin gear along an axial direction of the resin gear.

7. The resin gear according to any one of claims 1 to 6, wherein the space and the elastic member have a columnar shape having an axial direction of the resin gear as a height direction.

8. The resin gear according to any one of claims 1 to 6, wherein the space and the resin member have an elongated shape in which a radial direction of the resin gear is a longitudinal direction thereof when viewed from an axial direction of the resin gear.

9. The resin gear according to claim 8, wherein the space and the resin member have a shape in which both end portions in the longitudinal direction are enlarged when viewed from an axial direction of the resin gear.
